# EUROPÄISCHE PATENTSCHRIFT

(11) **EP 2 254 777 B1**
(45) Veröffentlichungstag und Bekanntmachung des Hinweises auf die Patenterteilung: **12.04.2017**
(21) Anmeldenummer: 09720788.0
(22) Anmeldetag: 18.02.2009
(51) Int. Cl.: B60S 1/40

(54) **VORRICHTUNG ZUM GELENKIGEN VERBINDEN EINES WISCHBLATTS**
DEVICE FOR THE JOINTED CONNECTION OF A WIPER BLADE
DISPOSITIF DE RACCORDEMENT ARTICULÉ D'UNE RACLETTE

(30) Priorität: 12.03.2008 DE 102008000626
(43) Veröffentlichungstag der Anmeldung: 01.12.2010
(73) Patentinhaber: Robert Bosch GmbH, 70442 Stuttgart (DE)
(72) Erfinder: OP'T ROODT, Inigo, B-3500 Hasselt (BE); DE BLOCK, Peter, B-3545 Halen (BE); BEELEN, Hans, B-3540 Herk De Stad (BE); WINDMOLDERS, Eric, B-3510 Kermt (BE)
(86) Internationale Anmeldenummer: PCT/EP2009/051885
(87) Internationale Veröffentlichungsnummer: WO 2009/112330

(56) Entgegenhaltungen:
- WO-A-03/084789
- DE-A1- 10 130 903
- DE-A1- 19 757 872

## Beschreibung

### Stand der Technik

Die Erfindung geht von einer Vorrichtung zum gelenkigen Verbinden eines Wischblatts nach dem Oberbegriff des Anspruchs 1 aus.

Aus der DE 199 14 413 A1 ist ein Scheibenwischer bekannt, dessen Wischarm an seinem freien Ende über eine Anschlussvorrichtung an einem gelenkfreien Wischblatt in Flachbalkenbauweise lösbar angelenkt ist. Die Anschlussvorrichtung besitzt ein Anschlusselement, das auf einem Tragelement des Wischblatts befestigt ist und an seiner Frontseite eine Gelenkachse in Form zweier seitlich angeordneter Lagerzapfen besitzt. An seinem der Gelenkachse entgegengesetzten Ende hat das Anschlusselement Lagerflächen, die zur Gelenkachse weisen und mit Lagerflächen an einem Verbindungsteil ein Gegenlager bilden. Das Verbindungselement besitzt an seiner Frontseite eine offene Nabe, die in seitlichen Führungswänden vorgesehen ist und in der die Lagerzapfen des Anschlusselements im montierten Zustand gelagert sind. Das Verbindungselement ist seitlich zur offenen Nabe an einem Wischarm befestigt. Die offene Nabe weist dabei parallel versetzt zum Wischarm in Richtung seines freien Endes, sodass das am Wischblatt befestigte Anschlusselement parallel zum Wischarm zwischen die seitlichen Führungswände des Verbindungselements geschoben werden kann, bis die seitlichen Lagerzapfen an den Lagerflächen der offenen Nabe zur Anlage kommen. Während der Montage werden die zum Gegenlager gehörenden Lagerflächen, die an Federzungen des Anschlusselements seitlich nachgiebig angeordnet sind, nach innen gedrückt und stellen sich wieder elastisch nach außen in die alte Position zurück, sobald sie die korrespondierenden Lagerflächen an dem zweiten Anschlussteil passiert haben. Somit ist bei flachen Winkeln zwischen dem Wischblatt und dem Wischarm, wie sie in der Betriebsposition des Wischblatts gegeben sind, das Gelenk durch das Gegenlager in Längsrichtung des Wischblatts fixiert.

Eine gattungsgemäße Vorrichtung ist beispielsweise aus der DE 19757872 A1 bekannt. Weiterer Stand der Technik wird durch die WO03/084789 A gebildet.

### Offenbarung der Erfindung

Nach der Erfindung weisen die Seitenwände des einen Bauteils, nämlich des Anschlusselements oder des Verbindungselements, Aussparungen auf, die zur Wischleiste hin offen sind, in die Vorsprünge in der Betriebsstellung des Wischblatts eintauchen, sodass in dieser Position die beiden Bauteile in Längsrichtung gegeneinander verriegelt sind. Dies ergibt mit einfachen Mitteln eine flachbauende, betriebssichere Gelenkverbindung zwischen dem Wischarm und dem Wischblatt, insbesondere, wenn gemäß einer Ausgestaltung der Erfindung das Anschlusselement als Blechkralle ausgebildet ist, und die Vorsprünge durch Laschen gebildet werden, die aus den Seitenteilen des Anschlusselements frei geschnitten und zu einem Verbindungselement hin gebogen sind, sodass sie in dessen Aussparungen bzw. in die sich daran anschließenden seitlichen Taschen des Wischarms eintauchen können. Bei einem nicht unter der Erfindung fallenden Ausführungsbeispiel können jedoch die Vorsprünge auch bei Anschlusselementen aus Kunststoff im Spritzgussverfahren hergestellt werden. Erfindungsgemäss sind die Vorsprünge bei einer Blechumformtechnik als Sicke oder dergleichen gefertigt werden. Ferner ist es vorteilhaft, dass die Seitenwände des Anschlusselements als ein Gelenkteil eine Gelenkachse tragen, die zwischen dem äußeren Ende des Anschlusselements und den Laschen angeordnet ist. Durch die kurze Distanz zwischen der Achse und den Laschen in Längsrichtung kann die Verriegelung der offenen Nabe in Betriebsposition über einen flachen Winkel zwischen dem Wischblatt und dem Wischarm wirksam sein, der im Vergleich zu einer Lösung, bei der die Verriegelung in einem größeren Abstand zur Gelenkachse vorgesehen ist, z.B. am antriebsseitigen Ende des Anschlusselements, bei gleicher Höhe größer sein.

Damit bei einer solch flachen Bauweise die offene Nabe genügend Freigang im Bereich des Gelenkzapfens besitzt, ist es vorteilhaft, dass im Bereich der Gelenkachse im Boden des Anschlusselements eine Aussparung vorgesehen ist, die einen ausreichenden Freigang für die äußerste Kontur der offenen Nabe gewährleistet.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

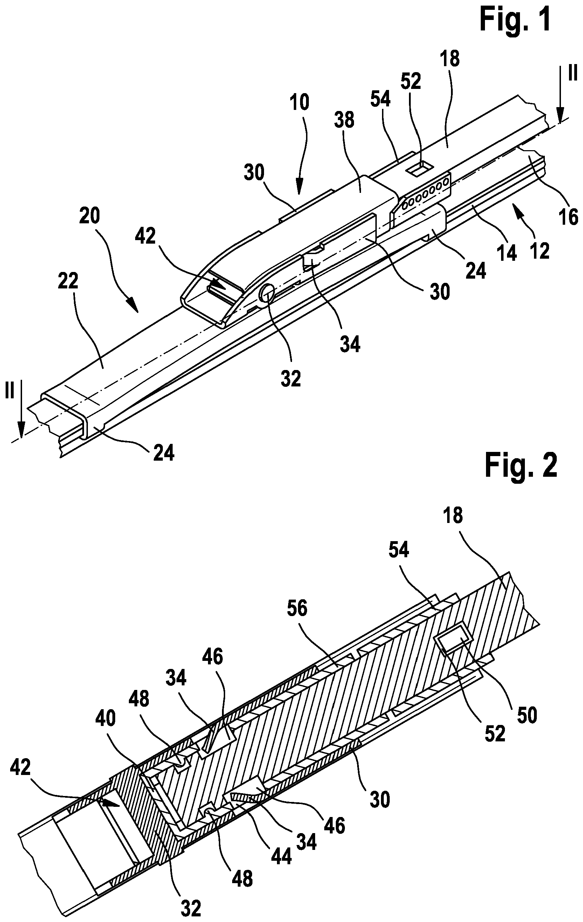

Fig. 1 eine perspektivische Teilansicht eines Wischblatts mit einer erfindungsgemäßen Vorrichtung,
Fig. 2 einen Schnitt entsprechend der Linie II-II in Fig. 1,

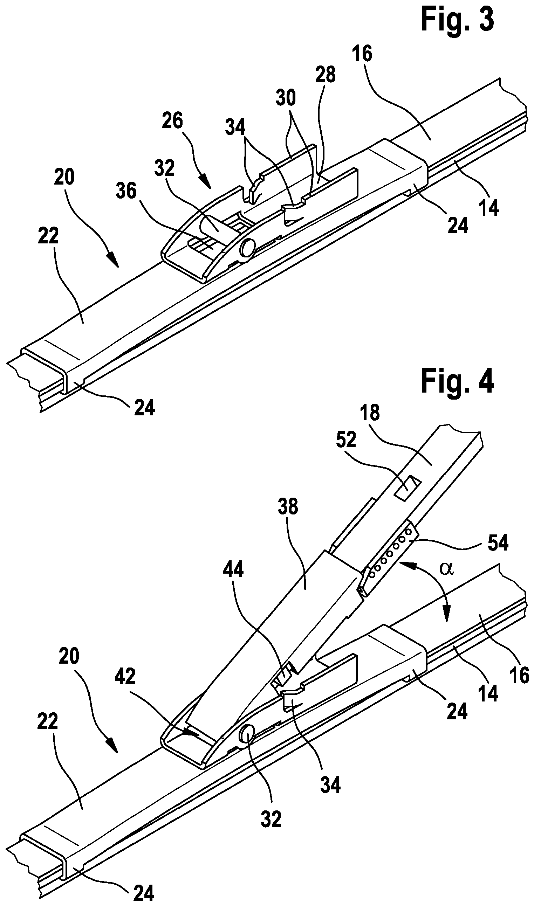

Fig. 3 eine perspektivische Teilansicht eines Wischblatts mit einem Anschlusselement und
Fig. 4 eine perspektivische Teilansicht eines Wischblatts mit einem teilweise abgeklappten Wischarm.

### Ausführungsformen der Erfindung

Ein Wischblatt 12 besitzt eine Wischleiste 14 mit einer Federschiene 16 als Tragelement, an dem ein Anschlusselement 20 befestigt ist. Das Tragelement kann auch aus zwei Federschienen 16 bestehen, die in seitliche Längsnuten der Wischleiste 14 eingelegt sind.

Das Anschlusselement 20 besitzt einen Befestigungskörper 22, dessen Krallen 24 die Federschiene 16 umfassen. Mit dem Befestigungskörper 22 ist ein Gelenkkörper 26 fest verbunden, der einen Boden 28 aufweist, an dessen Längsseiten Seitenwände 30 vorgesehen sind, die mit dem Boden 28 ein zu einem Wischarm 18 hin offenes, u-förmiges Querschnittprofil bilden. Der Befestigungskörper 22 und/oder der Gelenkkörper 26 können als Spritzgussteile aus Kunststoff hergestellt werden. Zweckmäßigerweise sind sie als Blechbiegeteile als so genannte Blechkrallen gefertigt. Die Seitenwände 30 tragen zum freien Ende des Wischblatts 12 hin eine Gelenkachse 32, die das eine Gelenkteil des Gelenks zwischen dem Wischarm 18 und dem Wischblatt 12 bildet, während das andere Gelenkteil von einer offenen Nabe 40 gebildet wird, die sich an einem Verbindungselement 38 befindet, und deren Nabenöffnung 42 in Betriebsstellung des Wischblatts 12 zum freien Ende des Wischblatts 12 weist. Im Bereich der Gelenkachse 32 ist im Boden 28 des Anschlusselements 28 eine Aussparung 36 vorgesehen, um bei flacher Bauweise einen ausreichenden Freiraum für die Schwenkbewegung der offenen Nabe 40 zu gewährleisten.

Das Verbindungselement 38, das mit dem Anschlusselement 20 die erfindungsgemäße Vorrichtung 10 bildet, kann fest mit dem Wischarm 18 verbunden werden, der in das Hohlprofil des Verbindungselements 38 hineinragt und dort durch Rastzapfen 48 oder eine Rastnase 50 am Verbindungselement 38 verriegelt wird, indem diese in entsprechende Rastlöcher 52 des Wischarms 18 einrasten. Eine andere Möglichkeit besteht darin, dass eine Führung 54 des Verbindungselements 38 mit dem Wischarm 18 verkrimpt wird.

Das Wischblatt 12 wird mit dem Wischarm 18 gelenkig verbunden, indem die Gelenkachse 32 in die offene Nabe 40 eingeführt wird, wenn das Wischblatt 12 zuvor eine Montageposition relativ zum Wischarm 18 eingenommen hat, die unter einem relativ großen Winkel α zum Wischarm 18 verläuft. Danach wird das Wischblatt 12 in seine Betriebsstellung gebracht, in der das Wischblatt 12 etwa parallel zum Wischarm 18 oder unter einem flachen Winkel α verläuft. Damit sich in der Betriebsstellung das Wischblatt 12 nicht unbeabsichtigt vom Wischarm 18 durch die Nabenöffnung 42 lösen kann, besitzen die Seitenwände 30 des Gelenkkörpers 26 des Anschlusselements 20 Vorsprünge in Form von Laschen 34, die aus den Seitenwänden 30 frei geschnitten und zum Verbindungselement 38 gebogen sind.

Dort greifen sie in der Betriebsstellung in entsprechende Aussparungen 44 des Verbindungselements 38 ein, die durch Taschen 46 des Wischarms 18 vertieft sind, sodass die offene Nabe 40 in der Betriebsstellung auf der Gelenkachse 32 gesichert ist. Die Sicherung ist nur in der Betriebsposition notwendig, in der der Wischarm 18 parallel zum Wischblatt 12 verläuft oder einen geringen Winkel α mit diesem einschließt. Bei der Montage bzw. Demontage, bei der das Wischblatt 12 mit dem Wischarm 18 einen größeren Winkel α einschließt, gelangen die Laschen 34 aus dem Bereich der Aussparungen 44 und der Taschen 46, sodass die Sicherung aufgehoben ist, und die offene Nabe 40 in Längsrichtung des Wischarms 18 von der Gelenkachse 32 abgezogen werden kann.

Bei dem gezeigten Ausführungsbeispiel ist die Gelenkachse 32 am Anschlusselement 20 und die offene Nabe 40 am Verbindungselement 38 angeordnet. Jedoch können diese Positionen grundsätzlich in einem nicht unter der Erfindung fallenden Ausführungsbeispiel auch vertauscht werden. Ferner umfassen die Seitenwände 30 des Anschlusselements 20 die Seitenwände 56 des Verbindungselements 38. Grundsätzlich sind auch Lösungen möglich, bei denen diese Anordnung umgekehrt ist. Ferner weist bei dem dargestellten Ausführungsbeispiel die Nabenöffnung 42 zum freien Ende des Wischblatts 12. Es ist jedoch auch möglich, dass die Nabenöffnung 42 der offenen Nabe 40 zum antriebsseitigen Ende des Wischblatts 12 weist. Diese Möglichkeiten kann der Fachmann entsprechend den Anforderungen des jeweiligen Anwendungsfalls ohne weiteres ausgestalten.

## Patentansprüche

1. Vorrichtung (10) zum gelenkigen Verbinden eines Wischblatts (12) mit einem Wischarm (18), wobei ein mit dem Wischblatt (12) zu verbindendes Anschlusselement (20) ein Gelenkteil (32) aufweist, das mit einem Gelenkteil (40) an einem mit dem Wischarm (18) zu verbindenden Verbindungselement (38) ein Gelenk bildet, und das Gelenkteil (40) eine in Längsrichtung des Anschlusselementes (20) offene Nabe (40) ist, die im montierten Zustand in der zur Nabenöffnung (42) entgegengesetzten Richtung gegenüber dem Verbindungselement (38) abgestützt ist, wobei sich die Seitenwände (30, 56) des Anschlusselements (20) und des Verbindungselements (38) überlappen und wobei die Seitenwände (56) des Verbindungselementes (38) Aussparungen (44) aufweisen, die zur Wischleiste (14) hin offen sind und in die Vorsprünge (34) in der Betriebsstellung des Wischblatts (12) eintauchen, sodass das Anschlusselement (20) und das Verbindungselement (38) in Längsrichtung gegeneinander verriegelt sind, **dadurch gekennzeichnet, dass** das Anschlusselement (20) als Blechkralle ausgebildet ist und die Vorsprünge durch Laschen (34) gebildet werden, die aus den Seitenwänden (30) des Anschlusselements (20) frei geschnitten und zum Verbindungselement (38) gebogen sind und in dessen Aussparungen (44) eintauchen.

2. Vorrichtung (10) nach Anspruch 1, **dadurch gekennzeichnet, dass** die Seitenwände (30) des Anschlusselements (20) als ein Gelenkteil eine Gelenkachse (32) tragen, die zwischen dem äußeren Ende des Anschlusselements (20) und den Laschen (34) angeordnet ist.

3. Vorrichtung (10) nach Anspruch 2, **dadurch gekennzeichnet, dass** im Bereich der Gelenkachse (32) im Boden (28) des Anschlusselements (20) eine Aussparung (36) vorgesehen ist.

4. Vorrichtung (10) nach einem der vorhergehenden Ansprüche, **dadurch gekennzeichnet, dass** das Verbindungselement (38) Rastzapfen (48) oder eine Rastnase (50) hat, die in entsprechende Rastlöcher (52) des Wischarms (18) einrasten können.

5. Wischblatt (12) **gekennzeichnet durch** eine Vorrichtung (10) nach einem der Ansprüche 1 bis 4.

## Claims

1. Device (10) for the jointed connection of a wiper blade (12) to a wiper arm (18), wherein a joining element (20) which is to be connected to the wiper blade (12) has a joint part (32) which forms a joint with a joint part (40) on a connecting element (38) to be connected to the wiper arm (18), and the joint part (40) is a hub (40) which is open in the longitudinal direction of the joining element (20) and, in the fitted state, is supported with respect to the connecting element (38) in the direction opposed to the hub opening (42), wherein the side walls (30, 56) of the joining element (20) and of the connecting element (38) overlap and wherein the side walls (56) of the connecting element (38) have cutouts (44) which are open toward the wiper strip (14) and into which projections (34) enter in the operating position of the wiper blade (12) such that the joining element (20) and the connecting element (38) are locked against each other in the longitudinal direction, **characterized in that** the joining element (20) is designed as a sheet-metal claw and the projections are formed by tabs (34) which are cut free from the side walls (30) of the joining element (20) and are bent toward the connecting element (38) and enter into the cutouts (44) therein.

2. Device (10) according to Claim 1, **characterized in that** the side walls (30) of the joining element (20) as one joint part bear a joint pin (32) which is arranged between the outer end of the joining element (20) and the tabs (34).

3. Device (10) according to Claim 2, **characterized in that** a cutout (36) is provided in the base (28) of the joining element (20) in the region of the joint pin (32).

4. Device (10) according to one of the preceding claims, **characterized in that** the connecting element (38) has latching studs (48) or a latching lug (50) which can latch into corresponding latching holes (52) in the wiper arm (18).

5. Wiper blade (12) **characterized by** a device (10) according to one of Claims 1 to 4.

## Revendications

1. Dispositif (10) de raccordement articulé d'un balai d'essuie-glace (12), comprenant un bras d'essuie-glace (18), un élément de raccordement (20) devant être raccordé au balai d'essuie-glace (12) présentant un partie d'articulation (32) qui forme une articulation avec une partie d'articulation (40) au niveau d'un élément de raccordement (38) devant être raccordé au bras d'essuie-glace (18), et la partie d'articulation (40) étant un moyeu (40) ouvert dans la direction longitudinale de l'élément de raccordement (20), qui, dans l'état monté, est supporté dans la direction opposée à l'ouverture de moyeu (42) par rapport à l'élément de raccordement (38), les parois latérales (30, 56) de l'élément de raccordement (20) et de l'élément de raccordement (38) se chevauchant et les parois latérales (56) de l'élément de raccordement (38) présentant des évidements (44) qui sont ouverts vers la raclette de balai d'essuie-glace (14) et dans lesquels s'enfoncent des saillies (34) dans la position de fonctionnement du balai d'essuie-glace (12), de telle sorte que l'élément de raccordement (20) et l'élément de raccordement (38) soient verrouillés l'un contre l'autre dans la direction longitudinale, **caractérisé en ce que** l'élément de raccordement (20) est réalisé sous forme de griffe en tôle et les saillies sont formées par des pattes (34) qui sont découpées dans les parois latérales (30) de l'élément de raccordement (20) et qui sont cintrées vers l'élément de raccordement (38) et qui s'enfoncent dans les évidements (44) de ce dernier.

2. Dispositif (10) selon la revendication 1, **caractérisé en ce que** les parois latérales (30) de l'élément de raccordement (20) portent, en tant que partie d'articulation, un axe d'articulation (32) qui est disposé entre l'extrémité extérieure de l'élément de raccordement (20) et les pattes (34).

3. Dispositif (10) selon la revendication 2, **caractérisé en ce que** dans la région de l'axe d'articulation (32), dans le fond (28) de l'élément de raccordement (20), est prévu un évidement (36).

4. Dispositif (10) selon l'une quelconque des revendications précédentes, **caractérisé en ce que** l'élément de raccordement (38) présente des tourillons d'encliquetage (48) ou un ergot d'encliquetage (50), qui peuvent s'encliqueter dans des trous d'encliquetage correspondants (52) du bras d'essuie-glace (18).

5. Balai d'essuie-glace (12), **caractérisé par** un dispositif (10) selon l'une quelconque des revendications 1 à 4.
